Europäisches Patentamt

European Patent Office

Office européen des brevets

(19)

(11) **EP 1 152 399 A1**

(12) **DEMANDE DE BREVET EUROPEEN**

(43) Date de publication:
**07.11.2001 Bulletin 2001/45**

(51) Int Cl.⁷: $G10L\ 15/20$, $G10L\ 21/02$

(21) Numéro de dépôt: **00870094.0**

(22) Date de dépôt: **04.05.2000**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **FACULTE POLYTECHNIQUEDE MONS**
**B-7000 Mons (BE)**

(72) Inventeur: **Dupont, Stéphane**
**7100 Saint Vaast (BE)**

(74) Mandataire: **Van Malderen, Joelle et al**
**Office Van Malderen,**
**Place Reine Fabiola 6/1**
**1083 Bruxelles (BE)**

(54) **Traitement en sous bandes de signal de parole par réseaux de neurones**

(57) La présente invention se rapporte à une méthode de traitement automatique de la parole perturbée par du bruit comprenant au moins les étapes suivantes :

- capture et numérisation de la parole sous forme d'au moins un signal (1) numérisé,
- extraction de plusieurs séquences temporelles ou trames (15) correspondant audit signal à l'aide d'un système d'extraction (10),
- décomposition de chaque trame (15) à l'aide d'un système d'analyse (20, 40) en au moins deux bandes de fréquences différentes de façon à obtenir au moins deux premiers vecteurs de paramètres représentatifs (45) pour chaque trame (15), un pour chaque bande de fréquences, et

- conversion à l'aide de systèmes convertisseurs (50) des premiers vecteurs de paramètres représentatifs (45) en seconds vecteurs de paramètres relativement insensibles au bruit (55), chaque système convertisseur (50) étant associé à une bande de fréquences et convertissant le premier vecteur de paramètres représentatifs (45) associé à cette même bande de fréquences, et

l'apprentissage desdits systèmes convertisseurs (50) étant réalisé sur base d'un corpus d'apprentissage qui correspond à un corpus de parole contaminée par du bruit (102).

FIG. 1

## Description

### Objet de l'invention

La présente invention se rapporte à une méthode et à un système de traitement automatique de la parole.

### Etat de la technique

Le traitement automatique de la parole comprend toutes les méthodes qui analysent ou génèrent de la parole par des moyens logiciels ou matériels. Actuellement, les principaux champs d'application des méthodes de traitement de la parole sont :

(1) la reconnaissance de la parole qui permet aux machines de « comprendre » la parole humaine et notamment de transcrire le texte qui a été prononcé (systèmes ASR - "Automatic Speech Récognition");
(2) la reconnaissance du locuteur, qui permet de déterminer parmi un ensemble de personnes (voire d'authentifier) une personne qui a parlé;
(3) la reconnaissance de la langue (français, allemand, anglais, etc.), qui permet de déterminer la langue utilisée par une personne;
(4) le codage de la parole qui a pour but premier de faciliter la transmission d'un signal vocal en réduisant la taille mémoire nécessaire au stockage dudit signal vocal et en réduisant son débit binaire;
(5) la synthèse de la parole qui permet de générer un signal de parole, par exemple à partir d'un texte.

Dans les systèmes actuels de reconnaissance de la parole, on commence par numériser le signal vocal capté par un microphone. Ensuite un système d'analyse calcule des vecteurs de paramètres représentatifs de ce signal vocal numérisé. Ces calculs sont effectués à intervalles réguliers, typiquement toutes les 10 millisecondes, par analyse de courtes séquences temporelles de signal, appelées trames, d'environ 30 millisecondes de signal numérisé. L'analyse du signal vocal conduira donc à une séquence de vecteurs de paramètres représentatifs avec un vecteur de paramètres représentatifs par trame. Ces vecteurs de paramètres représentatifs sont ensuite comparés à des référents. Cette comparaison fait généralement appel à une approche statistique basée sur le principe des modèles de Markov cachés (HMMs).

Ces modèles représentent des unités lexicales de base telles que des phonèmes, des diphones, des syllabes ou autres et permettent éventuellement l'estimation de probabilités ou de vraisemblances pour ces unités lexicales de base. Ces modèles peuvent être vus comme des briques permettant de construire des mots ou des phrases. Un lexique permet de définir des mots sur base de ces briques et une syntaxe permet de définir les agencements de mots pouvant constituer des phrases. Les variables définissant ces modèles sont en général estimées par entraînement sur base d'un corpus d'apprentissage constitué de signaux de parole enregistrés. Il est également possible d'utiliser des connaissances en phonétique ou en linguistique pour faciliter la définition des modèles et l'estimation de leurs paramètres.

Différentes sources de variabilité rendent difficile la tâche de reconnaissance, comme par exemple les différences de voix d'une personne à l'autre, les mauvaises prononciations, les accents locaux, les conditions d'enregistrement de la parole et le bruit ambiant.

Ainsi si l'utilisation des systèmes classiques de reconnaissance automatique de la parole dans des conditions bien contrôlées donne généralement satisfaction, le taux d'erreur de tels systèmes augmente cependant sensiblement en présence de bruit. Cette augmentation est d'autant plus importante que le niveau de bruit augmente. En effet, la présence de bruit conduit à des distorsions des vecteurs de paramètres représentatifs. Ces distorsions n'étant pas présentes dans les modèles, les performances du système se dégradent.

De nombreuses techniques ont été développées en vue de diminuer la sensibilité de ces systèmes au bruit. Ces différentes techniques peuvent être regroupées en cinq familles principales selon le principe qu'elles utilisent.

Parmi ces techniques, une première famille vise à effectuer un traitement dont le but est d'obtenir soit une version sensiblement débruitée d'un signal bruité capté par un microphone ou plusieurs microphones, soit une version sensiblement débruitée (compensée) des paramètres représentatifs (J.A. Lim & A.V. Oppenheim, « Enhancement and bandwith compression of noisy speech », *Proceedings of the IEEE*, 67(12) :1586-1604, December 1979). Un exemple de mise en oeuvre utilisant ce principe est décrit dans le document EP-0 556 992. Bien que très utiles, ces techniques présentent néanmoins l'inconvénient d'introduire des distorsions au niveau des vecteurs de paramètres représentatifs et sont généralement insuffisantes pour permettre une reconnaissance dans des environnements acoustiques différents, et en particulier dans le cas de niveaux de bruit élevés.

Une seconde famille de techniques concerne l'obtention de paramètres représentatifs intrinsèquement moins sensibles au bruit que les paramètres classiquement utilisés dans la plupart des systèmes de reconnaissance automatique de la parole (H. Hermansky, N. Morgan & H.G. Hirsch, "Recognition of speech in additive and concolutional noise based on rasta spectral processing", in *Proc. IEEE Intl. Conf. on Acoustics, Speech, and Signal Processing*, pages 83-86, 1993; O. Viiki, D. Bye & K. Laurila, "A recursive feature vector normalization approach for robust speech recognition in noise", in *Proc. of ICASSP'98*, pages 733-736, 1998). Cependant, ces techniques présentent certaines limites liées aux hypothèses sur lesquelles elles reposent.

Une troisième famille de techniques a également été proposée. Ces techniques, au lieu de chercher à transformer les paramètres représentatifs, sont basées sur la transformation des paramètres des modèles intervenant dans les systèmes de reconnaissance vocale de façon à les adapter aux conditions d'utilisation courantes (A.P. Varga & R.K. Moore, « Simultaneous recognition of current speech signais using hidden markov model decomposition », in *Proc. of EUROSPEECH'91*, pages 1175-1178, Genova, Italy, 1991; C.J. Leggeter & P.C. Woodland, « Maximum likehood linear regression for speaker adaptation », *Computer Speech and Language*, 9:171-185, 1995). Ces techniques d'adaptation sont en fait des techniques d'apprentissage rapide qui présentent l'inconvénient de n'être efficaces que si les conditions de bruit varient lentement. En effet, ces techniques nécessitent plusieurs dizaines de secondes de signal de parole bruité pour adapter les paramètres des modèles de reconnaissance. Si après cette adaptation, les conditions de bruit changent à nouveau, le système de reconnaissance ne sera plus capable d'associer correctement les vecteurs de paramètres représentatifs du signal vocal et les modèles.

Une quatrième famille de techniques consiste à mener une analyse permettant d'obtenir des paramètres représentatifs de bandes de fréquences (H. Bourlard & S. Dupont, « A new ASR approach based on independent processing and recombination of partial frequency bands » in Proc. of Int1. Conf. on Spoken Language Processing, pages 422-425, Philadelphia, October 1996). Des modèles peuvent alors être développés pour chacune de ces bandes; l'ensemble des bandes devant idéalement couvrir tout le spectre fréquentiel utile, c'est-à-dire jusqu'à 4 ou 8 kHz. L'intérêt de ces techniques, que nous appellerons par la suite « multi-bandes » est de pouvoir minimiser, dans une phase de décision ultérieure, l'importance de bandes de fréquences fortement bruitées. Cependant, ces techniques sont peu efficaces lorsque le bruit couvre une large gamme du spectre fréquentiel utile.

Enfin, une cinquième famille de techniques consiste à contaminer, par bruitage à plusieurs niveaux de bruits différents, la totalité ou une partie du corpus d'apprentissage et à estimer les paramètres des modèles intervenant dans le système ASR sur base de ce corpus bruité (T. Morii & H. Hoshimi, « Noise robustness in speaker independent speech », in *Proc. of the Intl. Conf. on Spoken Language Processing*, pages 1145-1148, November 1990). Un exemple de mise en oeuvre utilisant ce principe est décrit dans le document EP-A-0 881 625. L'intérêt de ces techniques est que leurs performances sont quasi-optimales lorsque le bruit caractérisant les conditions d'utilisation est similaire au bruit utilisé pour contaminer le corpus d'apprentissage. En revanche, lorsque les deux bruits sont différents, la méthode a peu d'intérêt. Le domaine d'application de ces techniques est donc malheureusement limité, dans la mesure où il n'est pas envisageable d'effectuer la contamination sur base de bruits diversifiés qui couvriraient tous les bruits susceptibles d'être rencontrés lors de l'utilisation.

## Buts de l'invention

La présente invention vise à proposer une méthode de traitement automatique de la parole dont le taux d'erreur est sensiblement diminué par rapport celui des techniques de l'état de l'art.

Plus particulièrement, la présente invention vise à fournir une méthode permettant la reconnaissance de la parole en présence de bruit (son codage et son débruitage), quelle que soit la nature de ce bruit, c'est-à-dire même si le bruit présente des caractéristiques large bande et/ou même si ces caractéristiques varient très fortement au cours du temps, par exemple s'il est composé d'un bruit contenant essentiellement des basses fréquences suivi d'un bruit contenant essentiellement des hautes fréquences.

## Principaux éléments caractéristiques de l'invention

La présente invention se rapporte à une méthode de traitement automatique de la parole perturbée par du bruit comprenant au moins les étapes suivantes :

- capture et numérisation de la parole sous forme d'au moins un signal numérisé,
- extraction de plusieurs séquences temporelles ou trames correspondant audit signal à l'aide d'un système d'extraction,
- décomposition de chaque trame à l'aide d'un système d'analyse en au moins deux bandes de fréquences différentes de façon à obtenir au moins deux premiers vecteurs de paramètres représentatifs pour chaque trame, un pour chaque bande de fréquences, et
- conversion à l'aide de systèmes convertisseurs des premiers vecteurs de paramètres représentatifs en seconds vecteurs de paramètres relativement insensibles au bruit, chaque système convertisseur étant associé à une bande de fréquences et convertissant le premier vecteur de paramètres représentatifs associé à cette même bande de fréquences, et
  l'apprentissage desdits systèmes convertisseurs étant réalisé sur base d'un corpus d'apprentissage qui correspond à un corpus de parole contaminée par du bruit.

De préférence, la méthode selon la présente invention comprend en outre une étape de concaténation des seconds vecteurs de paramètres représentatifs relativement insensibles au bruit associés aux différentes bandes de fréquences d'une même trame de façon à n'avoir plus qu'un seul troisième vecteur de paramètres concaténés pour chaque trame qui est ensuite utilisé comme entrée dans un système de reconnaissance automatique de la parole.

La conversion à l'aide des systèmes convertisseurs peut être réalisée par transformation linéaire ou par transformation non linéaire.

De préférence, les systèmes convertisseurs sont des réseaux de neurones artificiels.

De préférence, lesdits réseaux de neurones artificiels sont de type perceptron multicouches et comprennent chacun au moins deux couches cachées.

Avantageusement, l'apprentissage desdits réseaux de neurones artificiels de type perceptron multicouches fait appel à des cibles correspondant aux unités lexicales de base pour chaque trame du corpus d'apprentissage, les vecteurs de sortie des dernières couches cachées desdits réseaux de neurones artificiels étant utilisés comme vecteurs de paramètres représentatifs relativement insensibles au bruit.

L'originalité de la méthode de traitement automatique de la parole selon la présente invention réside dans la combinaison de deux principes, la décomposition « multi-bandes » et la contamination par du bruit, qui sont utilisés séparément dans l'état de la technique et ne présentent en tant que tels qu'un intérêt limité, tandis que leur combinaison confère à ladite méthode des propriétés particulières et des performances nettement améliorées par rapport aux méthodes actuellement disponibles.

Classiquement, les techniques de contamination des données d'entraînement exigent un corpus couvrant correctement la plupart des situations de bruit pouvant se présenter en pratique (c'est ce que l'on appelle l'entraînement multi-style), ce qui est quasiment impossible à réaliser, étant donné la diversité des formes de bruit. En revanche, la méthode selon l'invention est basée elle sur l'utilisation d'une approche « multi-bande » qui justifie les techniques de contamination.

La méthode selon la présente invention est en fait basée sur l'observation que, si l'on considère une bande de fréquences relativement étroite, les bruits ne différeront essentiellement que par leur niveau. De ce fait, des modèles associés à chacune des bandes de fréquences du système peuvent être entraînés après contamination du corpus d'apprentissage par un bruit quelconque à différents niveaux; ces modèles demeureront relativement insensibles à d'autres types de bruits. Une phase de décision ultérieure utilisera alors ces modèles dits « modèles robustes » en vue de la reconnaissance automatique de la parole.

La présente invention se rapporte également à un système de traitement automatique de la parole comprenant au moins:

- un système d'acquisition permettant l'obtention d'au moins un signal de parole numérisé,
- un système d'extraction permettant d'extraire plusieurs séquences temporelles ou trames correspondant audit signal
- des moyens permettant de décomposer chaque trame en au moins deux bandes de fréquences différentes de façon à obtenir au moins deux premiers vecteurs de paramètres représentatifs, un vecteur pour chaque bande de fréquences, et

- plusieurs systèmes convertisseurs, chaque système convertisseur étant associé à une bande de fréquences et permettant de convertir le premier vecteur de paramètres représentatifs associé à cette même bande de fréquences en un second vecteur de paramètres relativement insensibles au bruit, et l'apprentissage desdits systèmes convertisseurs étant réalisé sur base d'un corpus de parole contaminée par du bruit.

De préférence, les systèmes convertisseurs sont des réseaux de neurones artificiels, de préférence de type perceptron multicouches.

De préférence, le système de traitement automatique de la parole selon l'invention comprend en outre des moyens permettant la concaténation des seconds vecteurs de paramètres représentatifs relativement insensibles au bruit associés aux différentes bandes de fréquences d'une même trame de façon à n'avoir plus qu'un seul troisième vecteur de paramètres concaténés pour chaque trame, ledit troisième vecteur étant ensuite utilisé comme entrée dans un système de reconnaissance automatique de la parole.

Il convient de noter que l'architecture de l'analyse passe-bande étant similaire pour toutes les bandes de fréquences, seul le schéma bloc pour une des bandes de fréquence est détaillé ici.

La méthode et le système de traitement automatique selon la présente invention peuvent être utilisés pour la reconnaissance de la parole, pour le codage de la parole ou pour le débruitage de la parole.

## Brève description des dessins

La figure 1 présente un schéma des premières étapes de traitement automatique de la parole selon une forme préférée d'exécution de la présente invention, allant de l'acquisition du signal de parole jusqu'à l'obtention des paramètres représentatifs relativement insensibles au bruit associés à chacune des bandes de fréquences.

La figure 2 présente le principe de contamination du corpus d'apprentissage par du bruit, selon une forme préférée d'exécution de la présente invention.

La figure 3 présente un schéma des étapes de traitement automatique de la parole qui suivent les étapes de la figure 1 selon une forme préférée d'exécution de la présente invention, pour une application de reconnaissance de la parole, et allant de la concaténation des paramètres représentatifs insensibles au bruit associés à chacune des bandes de fréquences à la décision de reconnaissance.

La figure 4 présente les étapes de traitement automatique de la parole qui suivent les étapes de la figure 1 selon une forme préférée d'exécution de l'invention et qui sont communes à des applications de codage, de débruitage et de reconnaissance de la parole.

## Description d'une forme préférée d'exécution de l'invention

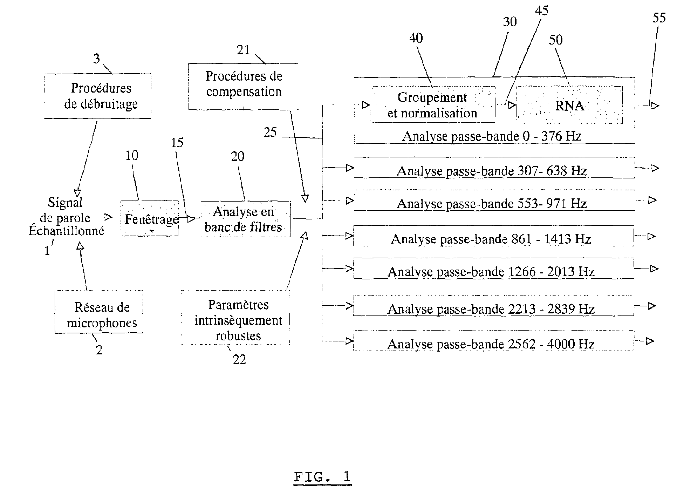

Selon une forme préférée d'exécution de l'invention, comme le montre la figure 1, le signal 1 échantillonné à une fréquence de 8 kHz passe tout d'abord par un module de fenêtrage 10 constituant un système d'extraction et qui divise le signal en une succession de trames temporelles 15 de 30 ms (240 échantillons). Deux trames successives se recouvrent de 20 ms. Les éléments de chaque trame sont pondérés par une fenêtre de Hamming.

Ensuite, dans une première étape de traitement numérique, on effectue une analyse en bandes critiques sur chaque trame de signal échantillonné à l'aide d'un module 20. Cette analyse est représentative de l'échelle de résolution fréquentielle de l'oreille humaine. L'approche utilisée est inspirée de la première phase d'analyse de la technique PLP (H. Hermansky, « Perpetual linear predictive (PLP) analysis speech », *the Journal of the Acoustical Society of America*, 87(4) : 1738-1752, April 1992). Elle opère dans le domaine fréquentiel. Les filtres utilisés sont trapézoïdaux et l'écart entre les fréquences centrales suit une échelle fréquentielle psychoacoustique. L'écart entre les fréquences centrales de deux filtres successifs est fixé à 0.5 Bark dans ce cas, la fréquence en Bark (B) pouvant être obtenue par l'expression:

$$B = 6 \ln( f/600 + \text{sqrt}( (f/600) \char`\^2 + 1 ) )$$

où (f) est la fréquence en Herz.
D'autres valeurs pourraient néanmoins être envisagées.

Pour un signal échantillonné à 8 kHz, cette analyse conduit à un vecteur 25 comprenant les énergies de 30 bandes de fréquences. La procédure inclut également une accentuation des hautes fréquences.

Ce vecteur de 30 éléments est ensuite dissocié en sept sous-vecteurs de paramètres représentatifs de l'enveloppe spectrale dans sept bandes de fréquences différentes. La décomposition suivante est utilisée: 1-4 (les filtres indicés de 1 à 4 constituent la première bande de fréquences), 5-8, 9-12, 13-16, 17-20, 21-24 et 25-30 (les fréquences concernées par ces sept bandes sont données à la figure 1).

Chaque sous-vecteur est normalisé en divisant les valeurs de ses éléments par la somme de tous les éléments du sous-vecteur, c'est-à-dire par une estimation de l'énergie du signal dans la bande de fréquences considérée. Cette normalisation confère au sous-vecteur une insensibilité vis-à-vis du niveau d'énergie du signal.

Pour chaque bande de fréquences, les paramètres représentatifs sont finalement constitués du sous-vecteur normalisé correspondant à la bande ainsi que de l'estimation de l'énergie du signal dans cette bande.

Pour chacune des sept bandes de fréquences, le traitement décrit ci-dessus est réalisé par le module correspondant à un module 40 qui fournit un vecteur 45 de paramètres représentatifs de la bande considérée. Le module 40 définit avec le module 20 un système appelé système d'analyse.

Les modules 10, 20 et 40 pourraient être remplacés par toute autre approche permettant d'obtenir des paramètres représentatifs de bandes de fréquences différentes.

Pour chaque bande de fréquences, les paramètres représentatifs correspondants sont ensuite utilisés par un système convertisseur 50 dont le but est d'estimer un vecteur 55 de paramètres représentatifs relativement insensibles au bruit présent dans le signal de parole échantillonné.

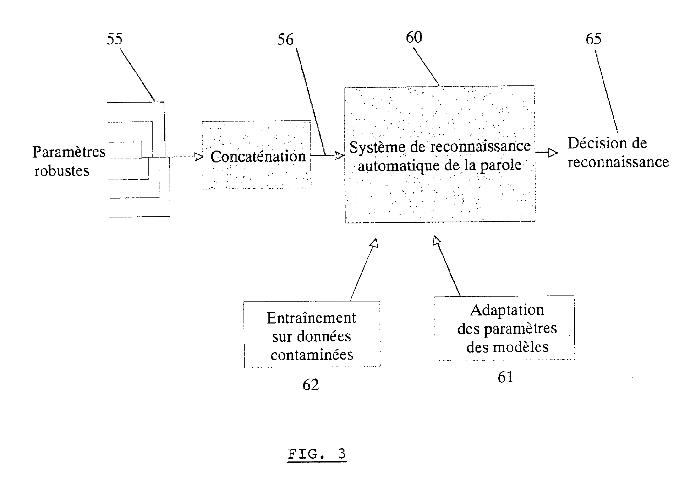

Comme le montre la figure 3, les vecteurs de paramètres représentatifs insensibles au bruit associés à chacune des bandes de fréquences sont ensuite concaténés pour constituer un plus grand vecteur 56.

Ce grand vecteur 56 est finalement utilisé comme vecteur de paramètres représentatifs de la trame considérée. Il pourra être utilisé par le module 60 qui correspond à un système de reconnaissance de la parole et dont le but est de fournir la séquence d'unités de parole qui ont été prononcées.

Pour réaliser la fonctionnalité souhaitée, un réseau de neurones artificiel (RNA) (B.D. Ripley, « Pattern recognition and neural networks », Cambridge University Press, 1996) a été utilisé comme implémentation du système convertisseur 50. De façon générale, le RNA calcule des vecteurs de paramètres représentatifs suivant une approche similaire à celle de l'analyse discriminante non linéaire (V. Fontaine, C. Ris & J.M. boite, « Nonlinear dicriminant analysis for improved speech recognition », in *Proc. of EUROSPEECH'97*, Rhodes, Greece, 1997). Néanmoins, d'autres approches de transformation linéaire ou de transformation non linéaire, n'impliquant pas nécessairement un RNA, pourraient également convenir pour calculer les vecteurs de paramètres représentatifs, comme par exemple des techniques d'analyse discriminante linéaire (Fukunaga, *Introduction to Statistical Pattern Analysis*, Academic Press, 1990), des techniques d'analyse en composantes principales (I.T. Jolliffe, « Principal Component Analysis », Springer-Verlag, 1986) ou des techniques de régression permettant l'estimation d'une version débruitée des paramètres représentatifs (H. Sorensen, « A cepstral noise reduction multi-layer neural network », Proc. of the IEEE International Conference on Acoustics, Speech and Signal Processing, vol.2, p.933-936, 1991)

Plus précisément, le réseau de neurones utilisé ici est un perceptron multicouche comprenant deux couches de neurones cachés. Les fonctions non linéaires des neurones de ce perceptron sont des sigmoïdes. Le RNA comprend une sortie par unité lexicale de base.

Ce réseau de neurones artificiel est entraîné par l'algorithme de rétro-propagation sur base d'un critère de minimisation de l'entropie relative. L'entraînement ou l'apprentissage est supervisé et fait appel à des cibles correspondant aux unités lexicales de base des exemples d'entraînement présentés. Plus précisément, pour chaque trame d'entraînement ou d'apprentissage, la sortie du RNA désirée correspondant à l'unité lexicale de base courante est mise à 1, les autres sorties étant mises à zéro.

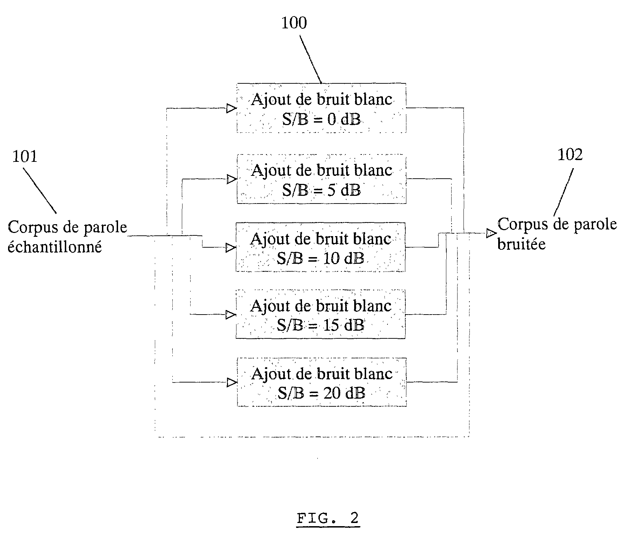

Comme l'illustre la figure 2, les paramètres de ce RNA sont estimés sur base d'un corpus d'apprentissage 101 contaminé par du bruit 102 à l'aide du module 100. De manière à couvrir une majorité des niveaux de bruits susceptibles d'être rencontrés en pratique, six versions du corpus d'apprentissage sont utilisées ici.

Une des versions est utilisée telle quelle, c'est-à-dire sans bruit ajouté. Les autres versions sont bruitées à l'aide du module 100 à des rapports signal/bruit différents: 0 dB, 5 dB, 10 dB, 15 dB et 20 dB. Ces six versions sont utilisées pour entraîner le RNA. Ces données d'entraînement sont utilisées en entrée du système présenté à la figure 1.

Ce système permet d'obtenir des paramètres représentatifs 45 des différentes bandes de fréquences envisagées. Ce sont ces paramètres qui alimentent les réseaux de neurones artificiels et permettent notamment l'entraînement par rétro-propagation (B.D. Ripley, « Pattern recognition and neural networks », Cambridge University Press, 1996).

Il convient de noter que toutes les techniques qui sont généralement mises en oeuvre lorsqu'on utilise des réseaux de neurones en traitement de la parole peuvent être appliquées ici. Ainsi ici il a été choisi d'appliquer en entrée du RNA plusieurs, plus précisément 9, vecteurs de paramètres représentatifs de trames successives de signal, (afin de modéliser la corrélation temporelle du signal de parole).

Lors de l'utilisation du RNA, une approche similaire à celle de l'analyse discriminante non linéaire est employée. Les sorties de la seconde couche cachée, au nombre de 30, sont utilisées comme paramètres 55 insensibles au bruit pour la bande de fréquences associée.

Comme le montre la figure 3, dans une première application, les vecteurs de paramètres associés à chacune des sept bandes de fréquences sont ensuite concaténés pour conduire à un vecteur 56 de 210 paramètres concaténés.

A chaque trame de signal, ce vecteur est alors utilisé comme entrée d'un système de reconnaissance automatique de la parole 60. Ce système est entraîné sur base de paramètres représentatifs calculés par la technique décrite ci-dessus (système illustré à la figure 1) à partir d'un corpus de parole (bruité ou non bruité) en adéquation avec la tâche de reconnaissance souhaitée.

Il est à noter que le corpus de données permettant le développement des systèmes 50 associés à chaque bande de fréquences n'est pas nécessairement le même que celui servant à l'entraînement du système de reconnaissance vocale 60.

Tous les types de techniques robustes de l'état de la technique peuvent intervenir librement dans le cadre du système proposé ici, comme l'illustre la figure 1.

Ainsi, les techniques d'acquisition robustes, notamment celles basées sur les réseaux de microphones 2 peuvent être utiles pour obtenir un signal de parole relativement débruité.

De même, les techniques de débruitage telles que la soustraction spectrale 3 (M. Berouti, R. Schwartz & J. Makhoul, « Enhancement of speech corrupted by acoustic noise », in *Proc. of ICASSP'79*, pages 208-211, April 1979) peuvent être envisagées.

Toute technique 22 de calcul de paramètres intrinsèquement robustes ou toute technique 21 de compensation des paramètres représentatifs peut également être utilisée.

Aussi les modules 10, 20 et 40 peuvent être remplacés par toute autre technique permettant d'obtenir des paramètres représentatifs de différentes bandes de fréquences.

Plus ces paramètres seront insensibles au bruit ambiant, mieux le système global se comportera.

Dans le cadre de l'application à la reconnaissance vocale, comme le montre la figure 2, des techniques 61 d'adaptation des modèles peuvent également être utilisées.

Une procédure 62 d'entraînement du système sur base d'un corpus de parole contaminé par du bruit est également possible.

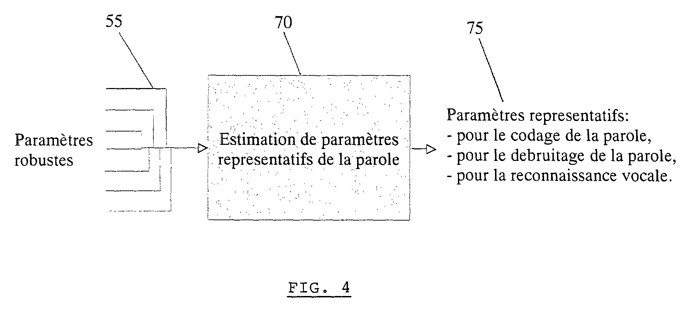

Dans une deuxième application, comme le montre la figure 4, les paramètres "robustes" 55 sont utilisés en entrée d'un module de régression 70 permettant l'estimation de paramètres représentatifs classiques 75 utilisables dans le cadre de techniques de traitement de la parole. Pour une tâche de codage de la parole ou de débruitage, ce système 70 pourra estimer les paramètres d'un modèle autorégressif du signal de parole. Pour une tâche de reconnaissance vocale, il est préférable d'estimer des cepstres, c'est-à-dire les valeurs de la transformée de Fourier discrète inverse des logarithmes de la transformée de Fourier discrète du signal.

Le module de régression est optimisé de façon classique sur base d'un corpus de parole bruitée ou non.

Les sorties idéales du module de régression sont calculées sur base des données non bruitées.

Toutes les opérations décrites ci-dessus sont réalisées par des modules logiciels tournant sur un microprocesseur unique. En outre, toute autre approche peut être utilisée librement.

Une approche possible correspond à une approche de traitement distribué où le module 60 de reconnaissance vocale tourne sur un serveur proche ou distant auquel on fournit les paramètres représentatifs 55 par l'intermédiaire d'un réseau informatique ou téléphonique.

## Revendications

**1.** Méthode de traitement automatique de la parole perturbée par du bruit comprenant au moins les étapes suivantes :

- capture et numérisation de la parole sous forme d'au moins un signal (1) numérisé,
- extraction de plusieurs séquences temporelles ou trames (15) correspondant audit signal à l'aide d'un système d'extraction (10),
- décomposition de chaque trame (15) à l'aide d'un système d'analyse (20, 40) en au moins deux bandes de fréquences différentes de façon à obtenir au moins deux premiers vecteurs de paramètres représentatifs (45) pour chaque trame (15), un pour chaque bande de fréquences, et
- conversion à l'aide de systèmes convertisseurs (50) des premiers vecteurs de paramètres représentatifs (45) en seconds vecteurs de paramètres relativement insensibles au bruit (55), chaque système convertisseur (50) étant associé à une bande de fréquences et convertissant le premier vecteur de paramètres représentatifs (45) associé à cette même bande de fréquences, et

l'apprentissage desdits systèmes convertisseurs (50) étant réalisé sur base d'un corpus d'apprentissage qui correspond à un corpus de parole contaminée par du bruit (102).

**2.** Méthode selon la revendication 1, **caractérisée en ce qu'**elle comprend en outre une étape de concaténation des seconds vecteurs de paramètres représentatifs relativement insensibles au bruit (55) associés aux différentes bandes de fréquences d'une même trame (15) de façon à n'avoir plus qu'un seul troisième vecteur de paramètres concaténés (56) pour chaque trame (15) qui est ensuite utilisé comme entrée dans un système de reconnaissance automatique de la parole (60).

**3.** Méthode selon la revendication 1 ou 2, **caractérisée en ce que** la conversion à l'aide des systèmes convertisseurs (50) est réalisée par transformation linéaire ou par transformation non linéaire.

**4.** Méthode selon l'une des revendications 1 à 3, **caractérisée en ce que** les systèmes convertisseurs (50) sont des réseaux de neurones artificiels.

**5.** Méthode selon la revendication 4, **caractérisée en ce que** lesdits réseaux de neurones artificiels sont de type perceptron multicouches et comprennent chacun au moins deux couches cachées.

**6.** Méthode selon la revendication 5, **caractérisée en ce que** l'apprentissage desdits réseaux de neurones artificiels de type perceptron multicouches fait appel à des cibles correspondant aux unités lexicales de base pour chaque trame du corpus d'apprentissage, les vecteurs de sortie des dernières couches cachées desdits réseaux de neurones artificiels étant utilisés comme vecteurs de paramètres représentatifs relativement insensibles au bruit.

**7.** Système de traitement automatique de la parole comprenant au moins:

- un système d'acquisition permettant l'obtention d'au moins un signal de parole (1) numérisé,
- un système d'extraction (10) permettant d'extraire plusieurs séquences temporelles ou trames (15) correspondant audit signal (1)
- des moyens (20, 40) permettant de décomposer chaque trame (15) en au moins deux bandes de fréquences différentes de façon à obtenir au moins deux premiers vecteurs de paramètres représentatifs (45), un vecteur pour chaque bande de fréquences, et
- plusieurs systèmes convertisseurs (50), chaque système convertisseur (50) étant associé à une bande de fréquences et permettant de convertir le premier vecteur de paramètres représentatifs (45) associé à cette même bande de fréquences en un second vecteur de paramètres relativement insensibles au bruit (55), et

l'apprentissage desdits systèmes convertisseurs (50) étant réalisé sur base d'un corpus de parole contaminée par du bruit (102).

**8.** Système de traitement automatique de la parole selon la revendication 7, **caractérisé en ce que** les systèmes convertisseurs (50) sont des réseaux de neurones artificiels, de préférence de type perceptron multicouches.

**9.** Système de traitement automatique de la parole selon la revendication 7 ou la revendication 8, **caractérisé en ce qu'**il comprend en outre des moyens permettant la concaténation des seconds vecteurs de paramètres représentatifs relativement insensibles au bruit (55) associés aux différentes bandes de fréquences d'une même trame (15) de façon à n'avoir plus qu'un seul troisième vecteur de paramètres concaténés (56) pour chaque trame (15), ledit troisième vecteur étant ensuite utilisé comme entrée dans un système de reconnaissance automatique de la parole (60).

10. Utilisation de la méthode selon l'une des revendications 1 à 6 et/ou du système selon l'une des revendications 7 à 9 pour la reconnaissance de la parole.

11. Utilisation de la méthode selon l'une des revendications 1, 3 à 6 et/ou du système selon l'une des revendications 7 ou 8 pour le codage de la parole.

12. Utilisation de la méthode selon l'une des revendications 1, 3 à 6 et/ou du système selon l'une des revendications 7 ou 8 pour le débruitage de la parole.

FIG. 1

100

Ajout de bruit blanc
S/B = 0 dB

Ajout de bruit blanc
S/B = 5 dB

101

Corpus de parole
échantillonné

Ajout de bruit blanc
S/B = 10 dB

102

Corpus de parole
bruitée

Ajout de bruit blanc
S/B = 15 dB

Ajout de bruit blanc
S/B = 20 dB

FIG. 2

FIG. 3

55                          70                          75

Paramètres                  Estimation de paramètres    Paramètres representatifs:
robustes                    representatifs de la parole  - pour le codage de la parole,
                                                        - pour le debruitage de la parole,
                                                        - pour la reconnaissance vocale.

FIG. 4

## RAPPORT DE RECHERCHE EUROPEENNE

**Office européen des brevets**

**Numéro de la demande**

EP 00 87 0094

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | HUSSAIN A: "Nonlinear sub-band processing for binaural adaptive speech-enhancement" ICANN99. NINTH INTERNATIONAL CONFERENCE ON ARTIFICIAL NEURAL NETWORKS (IEE CONF. PUBL. NO.470), EDINBURGH, UK, 7-10 SEPT. 1999, pages 121-125 vol.1, XP002147803 1999, London, UK, IEE, UK ISBN: 0-85296-721-7 | 1,3,4,7, 8,12 | G10L15/20 G10L21/02 |
| Y | * abrégé; figure 2 * <br><br> * page 121, colonne de droite, ligne 31 – page 122, colonne de gauche, ligne 11 * | 2,5,6, 9-11 | |
| Y | TIBREWALA S ET AL: "SUB-BAND BASED RECOGNITION OF NOISY SPEECH" IEEE INTERNATIONAL CONFERENCE ON ACOUSTICS, SPEECH, AND SIGNAL PROCESSING (ICASSP),US,LOS ALAMITOS, IEEE COMP. SOC. PRESS, 21 avril 1997 (1997-04-21), pages 1255-1258, XP000822682 ISBN: 0-8186-7920-4 * abrégé; figure 1 * * page 1255, colonne de droite, ligne 34-38 * | 2,6,9,10 | **DOMAINES TECHNIQUES RECHERCHES (Int.Cl.7)** <br> G10L |
| Y | US 5 185 848 A (ARITSUKA ET AL) 9 février 1993 (1993-02-09) * abrégé; figures 2,7,8 * * colonne 6, ligne 43 – colonne 7, ligne 17 * | 5,11 | |
|  | -/-- | | |

Le présent rapport a été établi pour toutes les revendications

| Lieu de la recherche | Date d'achèvement de la recherche | Examinateur |
|---|---|---|
| LA HAYE | 19 septembre 2000 | Quélavoine, R |

EP 1 152 399 A1

**Office européen des brevets**

**RAPPORT DE RECHERCHE EUROPEENNE**

Numéro de la demande

EP 00 87 0094

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | BOURLARD H ET AL: "SUBBAND-BASED SPEECH RECOGNITION" IEEE INTERNATIONAL CONFERENCE ON ACOUSTICS, SPEECH, AND SIGNAL PROCESSING (ICASSP),US,LOS ALAMITOS, IEEE COMP. SOC. PRESS, 21 avril 1997 (1997-04-21), pages 1251-1254, XP000822681 ISBN: 0-8186-7920-4 * le document en entier * | 1-12 | |
| A | YUK D -S ET AL: "ENVIRONMENT-INDEPENDENT CONTINUOUS SPEECH RECOGNITION USING NEURAL NETWORKS AND HIDDEN MARKOV MODELS" IEEE INTERNATIONAL CONFERENCE ON ACOUSTICS, SPEECH, AND SIGNAL PROCESSING - PROCEEDINGS. (ICASSP),US,NEW YORK, IEEE, vol. CONF. 21, 7 mai 1996 (1996-05-07), pages 3358-3361, XP000681764 ISBN: 0-7803-3193-1 * abrégé; figure 1 * | 1-12 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| LA HAYE | 19 septembre 2000 | Quélavoine, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

14

**ANNEXE AU RAPPORT DE RECHERCHE EUROPEENNE
RELATIF A LA DEMANDE DE BREVET EUROPEEN NO.**     EP 00 87 0094

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-09-2000

| Document brevet cité au rapport de recherche | Date de publication | Membre(s) de la famille de brevet(s) | Date de publication |
|---|---|---|---|
| US 5185848    A | 09-02-1993 | JP    2160298 A<br>JP    2776848 B<br>CA    2005117 A,C | 20-06-1990<br>16-07-1998<br>14-06-1990 |

EPO FORM P0460

Pour tout renseignement concernant cette annexe : voir Journal Officiel de l'Office européen des brevets, No.12/82